# FASCICULE DE BREVET EUROPEEN

(11) **EP 0 715 922 B1**
(45) Date de publication et mention de la délivrance du brevet: **10.06.1998**
(21) Numéro de dépôt: 95402733.0
(22) Date de dépôt: 04.12.1995
(51) Int. Cl.: B23K 9/23

(54) **Procédé de soudage par fusion de pièces de fonte à graphite sphéroidal**
Schweissverfahren durch Schmelzen von Bauteilen aus Gusseisen mit Kugel-Graphit
Welding method by melting spheroidal graphite cast iron workpieces

(30) Priorité: 09.12.1994 FR 9414835
(43) Date de publication de la demande: 12.06.1996
(73) Titulaire: FERRY-CAPITAIN (Sarl), 52300 Joinville (FR)
(72) Inventeur: Stauder, François, F-52300 Joinville (FR)
(74) Mandataire: L'Helgoualch, Jean

(56) Documents cités:
- EP-A- 0 013 323
- DE-A- 1 752 401
- SCHWEISSEN UND SCHNEIDEN, vol. 44, no. 4, 1 Avril 1992 pages 215-219, XP 000270828 DRAUGELATES U ET AL 'UNTERSUCHUNG DER WARMEEINFLUSSZONE VON SCHWEISSVERBINDUNGEN AUS DEM GUSSWERKSTOFF GGG-NICR 20 21)'
- PATENT ABSTRACTS OF JAPAN vol. 018 no. 592 (M-1702) ,11 Novembre 1994 & JP-A-06 221103 (MITSUBISHI HEAVY IND LTD) 9 Août 1994,
- SCHWEISSEN UND SCHNEIDEN, vol. 45, no. 10, 1 Octobre 1993 pages 571-573, XP 000397578 CISZEWSKI G 'ZUR FRAGE DER ZUGFESTIGKEIT UND BRUCHDEHNUNG VON LICHTBO- GENHANDGESCHWEISSTEN VERBINDUNGEN AUS PERLITISCHEM GUSSEISEN MIT KUGELGRAFIT'

## Description

La présente invention concerne le soudage de pièces de fonte grise, et plus particulièrement un procédé de soudage de fontes à graphite sphéroïdal ou fontes nodulaires, dans des conditions de préchauffage modérées.

Le soudage des fontes est une opération délicate et difficile à réaliser en raison notamment de leur inaptitude à supporter les contraintes résultant des cycles thermiques des méthodes classiques de soudage. De plus, les méthodes connues produisent des joints de soudage dont les caractéristiques mécaniques et esthétiques ne sont pas toujours satisfaisantes, ce qui limite leurs possibilités d'utilisation dans les procédés de réparation ainsi que dans les procédés d'assemblage de pièces (mécano-soudage).

On connaît des méthodes de soudage au moyen d'électrodes à base de fer, mais leur utilisation impose un préchauffage localisé à une température supérieure à 600°C, difficile à mettre en oeuvre, voire impossible dans le cas de pièces de masse importante.

Le soudage avec une électrode, quel qu'en soit le type, consiste à déposer un métal en fusion sur la fonte de base. Cette fonte, exposée à l'arc de soudage et au contact du métal en fusion, refond en surface sur une faible épaisseur (environ 0,1 à 3 mm). La vitesse de refroidissement est d'autant plus élevée que l'épaisseur soudée est plus importante et peut être de l'ordre de 800°C/s dans un domaine de températures entre 1200°C et 800°C dans le cas d'un cordon soudé déposé sur une pièce d'environ 50 mm d'épaisseur. En raison de cette vitesse de refroidissement et de la composition chimique d'une fonte eutectique, la solidification ne peut se faire suivant un diagramme stable et on obtient alors dans cette zone de liaison une structure métallographique composée de carbures eutectiques extrêmement durs et fragiles pouvant entraîner une fissuration lors du refroidissement.

Cet inconvénient peut être limité en utilisant un métal d'apport de soudage riche en nickel pour limiter la quantité de carbure de fer formé lors de la solidification, comme décrit par exemple dans le brevet FR-A-2.359.680. Dans tous les cas, il est nécessaire de traiter thermiquement la soudure à une température de l'ordre de 800 à 850°C.

D'autre part, la partie de métal sous-jacente à la zone de liaison (dénommée "zone affectée thermiquement") reste à l'état solide pendant le soudage, mais son refroidissement est analogue à celui de la zone de liaison et peut entraîner des transformations métallurgiques gênantes, par exemple une formation de structure de trempe. Pour éviter ce problème, il est indispensable de préchauffer la zone à souder à une température supérieure à 200°C (T°C Ms, température Martensite Start).

Enfin, avec les méthodes connues, il est difficile d'éviter la formation de contraintes dans la zone de liaison soudure - pièce, dépassant la limite élastique de la structure de type lédéburite obtenue, provoquant une fissuration. Pour limiter ce phénomène, il est nécessaire de préchauffer la zone soudée à une température de l'ordre de 600 à 650°C.

Dans les méthodes connues de soudage homogène à haute température, impliquant un préchauffage à environ 600°C, on utilise des électrodes à âme de fer et enrobage basique graphitique déposant une fonte nodulaire. Suivant une autre technique, décrite dans le brevet FR-A-2.407.786, on effectue un soudage avec une électrode d'acier enrobée par une composition à base de vanadium, de silicium, de carbonate de baryum, de fluorure de calcium et de fer en poudre. Ces méthodes sont généralement difficiles à mettre en oeuvre, voire impossible dans le cas de pièces massives.

On connaît aussi des méthodes de soudage hétérogène à froid utilisant des électrodes à âme en nickel ou en ferronickel, mais ces méthodes sont lentes, coûteuses, économiquement inacceptables, et ne procurent pas des joints soudés possédant des caractéristiques mécaniques satisfaisantes. Elles ne peuvent être envisagées que pour la réparation esthétique de petits défauts apparents.

Enfin, des procédés de soudage combinant un apport de chaleur et l'application d'une pression ont aussi été développés pour tenter d'éviter la formation de lédéburite responsable de la fragilité de la soudure, et par exemple, le brevet FR-A-2.455.944 décrit un tel procédé nécessitant l'utilisation d'une composition intermédiaire placée entre les pièces à souder, la zone de soudage étant portée à une température de 800 à 1.000°C sous une pression de 200 bars.

Il est donc extrêmement difficile de réaliser de manière satisfaisante un soudage de pièces en fonte grise, notamment en fonte à graphite sphéroïdal par les méthodes connues rappelées ci-dessus, tout particulièrement dans le cas de pièces de masse importante.

Enfin, le document EP-A-13323 décrit un procédé de soudage par fusion de pièces en fonte à graphite sphéroidal, comportant le beurrage de la zone de la pièce à souder avec un alliage de nickel et de fer comme métal d'apport et le soudage avec un acier au Cr, Cr-Ni ou un alliage Ni-Cr ou Ni-Cu comme métal d'apport.

La présente invention a pour objet un procédé de soudage semi-hétérogène des fontes à graphite sphéroïdal.

Le procédé suivant la présente invention est un procédé de soudage par fusion de pièces de fonte à graphite sphéroïdal, par la technique du beurrage, qui comporte les étapes suivantes :
a) on effectue un préchauffage à une température comprise entre 230 et 300°C, puis un beurrage de la zone de la pièce à souder ;
b) on applique au beurrage un traitement thermique à une température comprise entre 800 et 920°C pendant une durée appropriée, puis on effectue un cycle de refroidissement ;
c) on effectue à nouveau un préchauffage du beurrage à une température comprise entre 130 et 200°C, et on procède à un soudage de finition (remplissage ou assemblage).

Suivant une forme préférentielle de réalisation, le soudage effectué dans l'étape c) ci-dessus est suivi d'un traitement thermique de détentionnement à une température comprise entre 530 et 570°C pendant une durée appropriée de une à quelques heures.

Le préchauffage de l'étape a) ci-dessus s'effectue localement sur la pièce à traiter, au niveau du défaut à réparer ou de la zone d'assemblage par soudage, à une température comprise entre 230 et 300°C, et qui est de préférence d'environ 250°C. Une température de préchauffage qui excède 300°C ne présente aucun avantage. Par contre, il est important que cette température soit supérieure à la température Martensite Start (T°C Ms) inhérente au matériau traité, qui est généralement de l'ordre de 200°C. La limite inférieure de la température de préchauffage peut donc varier légèrement en fonction de la température Martensite Start de la fonte à souder. Une température inférieure à cette limite aurait pour inconvénient d'entraîner des risques de fissuration dans la zone de beurrage et dans la zone intermédiaire fonte - beurrage.

Les opérations de beurrage et de soudage des étapes a) et c) ci-dessus peuvent être réalisées, de préférence, au moyen d'une électrode à âme d'acier enrobée d'une composition semi-basique, par exemple en utilisant un poste de soudage à l'arc à courant continu (80 à 110 A), l'électrode étant branchée sur le pôle positif. Il peut être avantageux d'utiliser une électrode en acier doux à faible teneur en carbone comportant un enrobage à faible teneur en carbonate et en spath-fluor par rapport aux enrobages les plus usuels, mais contenant environ 10% en poids de silice. L'électrode utilisée pour le soudage de finition (remplissage, dans le cas d'une réparation, ou assemblage dans le cas du mécano-soudage) peut être adaptée en fonction des résultats recherchés, en particulier lorsque l'on réalise un assemblage d'une pièce de fonte et d'une pièce d'acier par le procédé de l'invention.

Le beurrage est effectué suivant les techniques classiques, en une ou plusieurs couches, et de préférence en deux ou trois couches de manière à obtenir une épaisseur totale de beurrage comprise entre 3 et 15 mm, de préférence 5 à 10 mm, d'épaisseur. Dans le cas de la réparation d'une pièce de fonte, le beurrage est effectué sur la zone à réparer. Dans le cas de l'assemblage de deux pièces par mécano-soudage, on effectue le beurrage sur les zones à assembler, de préférence préalablement chanfreinées.

Le traitement thermique appliqué pendant l'étape b) ci-dessus peut être adapté, conformément à la présente invention, en fonction des résultats recherchés.

Ainsi, lorsque l'on cherche à obtenir un joint soudé ayant des caractéristiques mécaniques au moins égales à celles de la fonte de base, il est avantageux de maintenir la température entre 850 et 920°C pendant une durée appropriée, par exemple 2 heures pour un joint soudé d'environ 25 mm d'épaisseur et 4 heures environ pour une pièce de 50 mm d'épaisseur, puis d'effectuer un refroidissement pour ramener la température au coeur du beurrage entre 250 et 300°C, en évitant toute remontée de température au-dessus de cette limite.

Ce traitement a pour effet de déstabiliser les carbures de fer indésirables qui peuvent se former dans la zone de liaison entre le beurrage et la fonte de base. De tels carbures eutectiques sont en effet fragiles et très durs, donc difficiles à usiner, et pourraient entraîner une fissuration de cette zone de liaison. Au contraire, le traitement thermique a pour effet de favoriser la formation, dans cette zone, de nodules très fins du type fonte malléable à coeur noir, en forte concentration au sein d'une matrice ferritique. Il importe que la température au coeur du beurrage soit ramenée à moins de 300°C pour éviter une graphitisation de la perlite formée par la trempe.

Le traitement thermique est appliqué de préférence à l'ensemble de la pièce de fonderie, mais il est possible d'effectuer un traitement localisé.

Il est tout particulièrement avantageux d'effectuer le refroidissement par trempe à l'air soufflé, localisée sur le beurrage, pour ramener sa température à 250-300°C environ. Ce traitement, localisé sur le beurrage, procure une structure ferrito-perlitique où la perlite donne à l'ensemble du joint soudé les excellentes propriétés mécaniques recherchées.

Si par contre on cherche surtout à obtenir un joint soudé assurant une parfaite étanchéité et présentant extérieurement une ressemblance aussi proche que possible avec la pièce de fonte de base, il est alors avantageux d'effectuer le traitement thermique à une température comprise entre 800 et 850°C pendant une période plus longue que dans le cas précédent, par exemple 4 heures pour une épaisseur de joint soudé de 25 mm, 6 heures pour 50 mm, et de laisser ensuite refroidir à l'air libre. Dans ce cas également, il est préférable d'appliquer le traitement thermique à l'ensemble de la pièce de fonderie. Cependant, un traitement localisé est également possible, notamment dans le cas de l'assemblage de pièces de fonderie.

Contrairement au cas du traitement décrit ci-dessus où on obtient une structure perlitique dans la zone de liaison beurrage - fonte, on obtient ici une zone ferritique plus malléable.

Dans les deux cas, le traitement thermique est effectué en utilisant un outillage usuel, avec une vitesse de chauffage qui peut être d'environ 50 à 100°C/heure. On peut par exemple utiliser un four du type utilisé habituellement dans l'industrie métallurgique, ou encore des résistances chauffantes céramiques appliquées localement.

Les essais effectués sur les joints soudés réalisés conformément à l'invention on mis en évidence d'excellentes propriétés mécaniques et micrographiques. En particulier, les caractéristiques mécaniques du joint soudé sont équivalentes, et même dans certains cas supérieures, à celles de la fonte de base, et ceci est obtenu avec des températures de préchauffage relativement faibles, de l'ordre de 250°C.

De plus, on peut remarquer que la rupture à la traction ne présente aucun caractère fragile, et la déformation par striction observée dans la zone fondue, avant rupture, indique de manière fiable la proximité de la résistance maximale à la traction du métal de base. Les essais effectués sur les joints préparés par le procédé de l'invention ont montré que la dureté des joints soudés est inférieure à 350 Vickers (HV 500, dureté Vickers sous une charge de 500 g), ce qui confirme qu'ils sont parfaitement usinables, contrairement aux joints soudés obtenus par les techniques classiques.

Le procédé conforme à la présente invention présente de nombreux avantages. En particulier, il peut être mis en oeuvre sans nécessiter l'utilisation d'équipements spéciaux, et il permet d'élargir le domaine d'application des fontes à graphite sphéroïdal (fontes GS) non seulement dans le domaine de la réparation, en permettant de réparer des pièces qui auparavant étaient mises au rebut, mais aussi dans le domaine de l'assemblage par mécano-soudage de plaques de fontes entre elles ou avec des plaques d'aciers alliés ou non. Dans le domaine de la réparation, il devient possible de réparer aisément des pièces de fonderie présentant des défauts survenus à la coulée ou lors de la solidification.

Des exemples non limitatifs de mise en oeuvre du procédé de l'invention sont décrits ci-après, pour une réparation par soudage d'une pièce de fonderie, un mécano-soudage de deux pièces de fonte GS et un mécano-soudage d'une pièce de fonte GS avec une pièce d'acier (allié ou non).

### Exemple 1

### Réparation d'une pièce de fonte GS 400-12.

Le but de cet exemple est de réparer une pièce de fonderie en obtenant un joint soudé ayant des caractéristiques mécaniques au moins égales à celles de la fonte de base.

On procède à la réparation d'une pièce de fonderie (fonte GS 400-12) constituée par une plaque de 55 mm d'épaisseur présentant un défaut (inclusion de sable) de 25 mm de profondeur, sur lequel on effectue un affouillage mécanique par meulage de manière à former un cratère.

La composition chimique de la fonte utilisée est la suivante :

| C | Si | Mn | P | S | Ni | Cr | Mo | Cu |
|---|---|---|---|---|---|---|---|---|
| 3,40 | 2,18 | 00,22 | 0,025 | 0,007 | 0,10 | 0,05 | 0,06 | 0,16 |

La pièce de fonte est chauffée localement à une température d'environ 250°C, au niveau du défaut à réparer, au moyen de torches à gaz.

Puis on procède au beurrage en utilisant une électrode à âme métallique de 3,2 mm de diamètre, en acier doux à faible teneur en carbone à enrobage semi-basique, de type disponible dans le commerce. La composition chimique de l'électrode est la suivante :

| C | Mn | Si | Ni | Mo | V |
|---|---|---|---|---|---|
| 0,06 | 0,6 | 0,41 | 0,029 | 0,01 | 0,012 |

| S | P | Cu | Cr | Ti | Al |
|---|---|---|---|---|---|
| 0,007 | 0,016 | 0,011 | 0,024 | 0,013 | 0,001 |

L'enrobage utilisé a une faible teneur en carbonate et en spath-fluor et constitue un enrobage du type "chaux - silice" contenant environ 10% de silice. Le produit de fusion de cet enrobage est un laitier d'aspect vitreux.

On fait fonctionner l'électrode en courant continu d'intensité comprise entre 85 et 100 A et une tension de 23 V, la température locale de la pièce à traiter n'étant pas inférieure à 250°C. Le beurrage est effectué en trois couches successives procurant une épaisseur totale d'environ 6 - 7 mm. Les bords du cratère sont entourés d'un cordon de soudure afin de protéger la fonte de base d'une éventuelle fusion lors de l'opération ultérieure de remplissage.

Après refroidissement à l'air libre, jusqu'à température ambiante, on contrôle le beurrage et on élimine le cas échéant les quelques défauts qui peuvent apparaître.

On effectue ensuite le traitement thermique global de l'ensemble de la pièce de fonderie que l'on porte progressivement à une température de 900°C, dans un four, la vitesse de montée en température étant de 50°C/h.

La pièce est maintenue à 900°C pendant 2 heures (pour une épaisseur de joint soudé de 25 mm), puis elle est refroidie par la technique de trempe à l'air soufflé dirigé sur le beurrage, de manière à ramener la température au coeur du beurrage à environ 250 - 300°C.

La surface du beurrage, après le traitement thermique ci-dessus, est traitée mécaniquement par meulage afin d'éliminer l'oxyde de fer formé en surface, puis, après contrôle du beurrage, on effectue un préchauffage de la zone à traiter, à une température d'environ 150°C. On procède alors au soudage de finition (remplissage) en utilisant une électrode identique à celle décrite ci-dessus, l'intensité du courant étant de 95 - 110 A.

On procède enfin à un traitement thermique de détentionnement afin d'éliminer toutes contraintes résiduelles au voisinage de la soudure, en chauffant progressivement à une température d'environ 550°C, avec une vitesse de montée en température de l'ordre de 50°C/h. La température est maintenue pendant une durée d'environ 2 heures (pour une épaisseur soudée de 25 mm), puis on laisse refroidir à l'air libre.

Les caractéristiques mécaniques du joint soudé obtenu sont indiquées au tableau ci-après.

### Résistance à la traction Les essais ont été effectués sur des éprouvettes de 10 mm de diamètre

| Echantillon | Résistance à la rupture (MPa) | Limite élastique (MPa) | A% | Z% |
|---|---|---|---|---|
| 1 | 486 | 394 | 26,4 | 72,9 |
| 2 | 503 | 424 | 22,6 | 71,9 |
| 3 | 490 | 431 | 24,2 | 75,0 |
| 4 | 494 | 425 | 21,2 | 70,8 |
| A% = Allongement. Z% = Striction (réduction de la section). | | | | |

On peut observer que la rupture est localisée au milieu de la zone fondue.

### Essai de pliage Les essais ont été effectués sur des échantillons de 10x20x180 mm

| Poinçon (diamètre mm) | Contrainte à la rupture (MPa) | Angle de pliage (°) |
|---|---|---|
| 40 | 72 | 49 |

Les essais ont montré que la rupture au pliage se fait au niveau de la zone de liaison.

### Exemple 2

### Réparation d'une pièce de fonte GS 400-12.

Le but de cet exemple est de réparer une pièce de fonderie en obtenant un joint de soudé ayant des caractéristiques esthétiques parfaites, procurant une apparence identique à celle de la fonte de base, tout en assurant une parfaite étanchéité.

On procède comme dans l'Exemple 1, en utilisant une pièce de fonte de mêmes dimensions présentant le même défaut. Après un chauffage localisé à 250°C, on effectue le beurrage dans les mêmes conditions et avec la même électrode que dans l'Exemple 1, puis on procède au traitement thermique suivant;

La pièce de fonderie est portée progressivement à une température d'environ 820°C, la vitesse de montée en température étant d'environ 50°C/h. La pièce est maintenue à cette température pendant une durée d'environ 4 heures (pour une épaisseur de 25 mm), puis on procède au refroidissement à l'air libre.

On obtient ainsi, après remplissage et traitement thermique de détentionnement comme dans l'Exemple 1, un joint soudé d'apparence très proche de celle de la fonte de base, sans formation de fissure.

### Exemple 3

### Assemblage de deux pièces de fonte GS 400-12.

On effectue l'assemblage (mécano-soudage) de deux plaques de fonte de 25 mm d'épaisseur ayant la même composition que celle de l'Exemple 1.

Les surfaces des zones à assembler sont chanfreinées par usinage, et les chanfreins sont contrôlés par ressuage.

On effectue un préchauffage local des chanfreins à 250°C environ, sur toute leur épaisseur, et on réalise ensuite un beurrage sur chaque chanfrein au moyen de la même électrode que dans l'Exemple 1, en trois couches de manière à obtenir une épaisseur totale d'environ 5 mm sur chaque chanfrein. Un cordon de soudure est déposé à la limite du beurrage pour éviter tout débordement qui pourrait entraîner la fusion de la fonte de base dans la zone de liaison au cours de l'opération ultérieure d'assemblage.

Après refroidissement jusqu'à température ambiante, on procède à un traitement thermique du beurrage identique à celui de l'Exemple 1, suivi d'une trempe à l'air soufflé jusqu'à ramener la température au coeur du beurrage à environ 250 - 300°C.

Après refroidissement pour contrôle du beurrage obtenu, on effectue un préchauffage local des zones à assembler à une température d'environ 150°C. L'assemblage des deux pièces de fonte se fait alors par simple soudage avec la même électrode que ci-dessus, dans les mêmes conditions que dans l'Exemple 1, et on effectue ensuite un traitement thermique de détentionnement à 550°C environ, pendant environ 2 heures, comme indiqué ci-dessus. Le refroidissement est ensuite réalisé à l'air libre.

### Exemple 4

### Assemblage d'une pièce de fonte GS 400-12 et d'une pièce d'acier.

On effectue l'assemblage d'une pièce de fonte identique à celle de l'Exemple 3 ci-dessus avec une pièce en acier de type XC 38 (acier non allié apte au traitement thermique) de mêmes dimensions que la plaque de fonte.

Chacune des pièces de fonte et d'acier est chanfreinée sur la zone à assembler, et contrôlée par ressuage.

On procède comme indiqué dans l'Exemple 1, mais en ne réalisant le préchauffage et le beurrage que sur les chanfreins de la pièce de fonte GS.

L'électrode utilisée pour le beurrage de la pièce de fonte est identique à celle de l'Exemple 1. On effectue ensuite sur ce beurrage le même traitement thermique à 900°C ou 820°C selon le résultat recherché (priorité donnée aux propriétés mécaniques ou aux caractéristiques esthétiques du joint soudé).

L'électrode utilisée pour l'opération d'assemblage est identique à l'électrode ci-dessus, mais elle peut être choisie en fonction de la nature de l'acier à assembler à la pièce de fonte.

Le traitement thermique final de détentionnement est identique à celui décrit dans l'Exemple 1 ci-dessus.

On répète cette procédure en remplaçant l'acier XC 38 par un acier allié de type 35 NCD 6 (acier allié au nickel, chrome et molybdène). On procède comme ci-dessus mais en remplaçant l'électrode utilisée pour l'opération d'assemblage par une autre électrode, disponible dans le commerce, ayant une composition voisine de celle de l'acier allié utilisé.

Les essais confirment les excellents résultats obtenus.

## Revendications

1. Procédé de soudage par fusion de pièces de fonte à graphite sphéroïdal, par la technique du beurrage, comportant les étapes suivantes :
a) on effectue un préchauffage à une température comprise entre 230 et 300°C, puis un beurrage de la zone de la pièce à souder ;
b) on applique au beurrage un traitement thermique à une température comprise entre 800 et 920°C pendant une durée appropriée, puis on effectue un cycle de refroidissement ;
c) on effectue à nouveau un préchauffage du beurrage à une température comprise entre 130 et 200°C, et on procède à un soudage de finition.

2. Procédé selon la revendication 1, caractérisé en ce que le soudage effectué dans l'étape c) est suivi d'un traitement thermique de détentionnement à une température comprise entre 530 et 570°C pendant une durée appropriée de une à quelques heures.

3. Procédé selon la revendication 2, caractérisé en ce que l'épaisseur totale du beurrage est comprise entre 3 et 15 mm.

4. Procédé selon la revendication 1, caractérisé en ce que le traitement thermique de l'étape b) est effectué à une température comprise entre 850 et 920°C.

5. Procédé selon la revendication 4, caractérisé en ce que le traitement thermique est suivi d'un refroidissement pour ramener la température au coeur du beurrage entre 250 et 300°C.

6. Procédé selon la revendication 5, caractérisé en ce que le refroidissement est effectué par trempe à l'air soufflé, localisée sur le beurrage.

7. Procédé selon la revendication 1, caractérisé en ce que le traitement thermique de l'étape b) est effectué à une température comprise entre 800 et 850°C.

8. Procédé selon l'une quelconque des revendications 1 à 3, caractérisé en ce que le beurrage et le soudage des étapes a) et c) sont réalisés au moyen d'une électrode à âme d'acier enrobée d'une composition semi-basique.

## Claims

1. Process for the fusion welding of spheroidal-graphite cast-iron castings using the technique of buttering, comprising the following steps:
a) a preheat at a temperature of between 230 and 300°C is carried out before buttering the zone of the casting to be welded;
b) a heat treatment at a temperature of between 800 and 920°C is applied to the buttering for a suitable period and then a cooling cycle is carried out;
c) again, a preheat of the buttering is carried out at a temperature of between 130 and 200°C and followed by a finish weld.

2. Process according to Claim 1, characterized in that the welding carried out in step c) is followed by a stress-relieving heat treatment at a temperature of between 530 and 570°C by a suitable period of from one to a few hours.

3. Process according to Claim 2, characterized in that the total thickness of the buttering is between 3 and 15 mm.

4. Process according to Claim 1, characterized in that the heat treatment in step b) is carried out at a temperature of between 850 and 920°C.

5. Process according to Claim 4, characterized in that the heat treatment is followed by cooling in order to bring the temperature of the centre of the buttering down to between 250 and 300°C.

6. Process according to Claim 5, characterized in that the cooling is carried out by air-blast quenching, localized on the buttering.

7. Process according to Claim 1, characterized in that the heat treatment in step b) is carried out at a temperature of between 800 and 850°C.

8. Process according to any one of Claims 1 to 3, characterized in that the buttering and the welding in steps a) and c) are carried out by means of a steel-cored electrode coated with a semibasic composition.

## Patentansprüche

1. Verfahren zum Schmelzschweißen von Graugußstücken vom Kugelgraphittyp unter Anwendung der Auftragsschweiß-Technik, die folgenden Schritte umfassend:
a) das Vorwärmen des zu schweißenden Bereichs des Gußstücks auf eine Temperatur zwischen 230 und 300°C, und anschließendes Aufbringen eines Schweißauftrags in diesem Bereich;
b) das Wärmebehandeln des Schweißauftrags bei einer Temperatur zwischen 800 und 920°C für eine entsprechende Dauer, dann die Durchführung eines Abkühlungszyklus;
c) ein erneutes Vorwärmen des Schweißauftrags auf eine Temperatur zwischen 130 und 200°C, gefolgt von einem Endschweißen.

2. Verfahren nach Anspruch 1, dadurch gekennzeichnet, daß dem in Schritt c) durchgeführten Schweißen ein Spannungsfreiglühen bei einer Temperatur zwischen 530 und 570°C für eine angemessene Zeit zwischen einer und einigen Stunden folgt.

3. Verfahren nach Anspruch 2, dadurch gekennzeichnet, daß die Gesamtdicke des Schweißauftrags zwischen 3 und 15 mm liegt.

4. Verfahren nach Anspruch 1, dadurch gekennzeichnet, daß die Wärmebehandlung in Schritt b) bei einer Temperatur zwischen 850 und 920°C durchgeführt wird.

5. Verfahren nach Anspruch 4, dadurch gekennzeichnet, daß der Wärmebehandlung eine Abkühlung folgt, um die Temperatur im Kern des Schweißauftrags auf zwischen 250 und 300°C zu bringen.

6. Verfahren nach Anspruch 5, dadurch gekennzeichnet, daß das Abkühlen durch Abschrecken mit einem auf den Schweißauftrag gerichteten Luftstrom erfolgt.

7. Verfahren nach Anspruch 1, dadurch gekennzeichnet, daß die Wärmebehandlung von Schritt b) bei einer Temperatur zwischen 800 und 850°C durchgeführt wird.

8. Verfahren nach einem der Ansprüche 1 bis 3, dadurch gekennzeichnet, daß die Auftragsschweißung und das Schweißen der Schritte a) und c) mit Hilfe einer Mantelelektrode mit Stahlkern durchgeführt wird, der mit einer semibasischen Zusammensetzung umhüllt ist.
